# EUROPEAN PATENT SPECIFICATION

(11) **EP 2 190 634 B1**
(45) Date of publication and mention of the grant of the patent: **23.03.2011**
(21) Application number: 08776332.2
(22) Date of filing: 07.07.2008
(51) Int. Cl.: B25J 13/08, B25J 17/02, B25J 19/06, B23P 19/00

(54) **TWO-AXES-COMPENSATION AND ANTICOLLISION DEVICE MOUNTED BETWEEN AN INDUSTRIAL ROBOT AND ITS TOOL**
ZWISCHEN EINEM INDUSTRIEROBOTER UND SEINEM WERKZEUG MONTIERTE ZWEIACHSENAUSGLEICHS- UND ANTIKOLLISIONSVORRICHTUNG
DISPOSITIF DE COMPENSATION ET ANTICOLLISION À DEUX AXES MONTÉ ENTRE UN ROBOT INDUSTRIEL ET SON OUTIL

(30) Priority: 11.07.2007 IT TO20070512
(43) Date of publication of application: 02.06.2010
(73) Proprietor: Tekno Alfa S.r.l., 10121 Torino (IT)
(72) Inventor: BORSA, Giovanni, I-12034 Paesana (IT)
(74) Representative: Aprà, Mario
(86) International application number: PCT/IB2008/001777
(87) International publication number: WO 2009/007824

(56) References cited:
- EP-A- 0 341 157
- EP-A- 0 447 918
- DD-A1- 253 001
- DE-A- 4 002 225
- DE-A1- 2 556 595
- DE-A1- 10 130 276
- GB-A- 2 273 326
- US-A- 4 778 329
- US-A- 4 790 584
- US-A- 5 484 219

## Description

The present invention relates to a two-axes-compensation and anticollision device associated to the operating tool of an industrial robot.

A range of application, which is provided purely by way of non-limiting example, of the present invention is that of industrial robots operating at the service of machine tools. A typical case is represented by a robot of the above sort, in which a rigid and vertical manipulator arm is mounted mobile in a horizontal direction (axis X) along a rectilinear guide constituted by a suspended bar. The manipulator arm carries at its bottom end an operating tool, for example a collet, which is mobile in a vertical direction between a raised position, in which it supports - during a forward travel parallel to the axis X - a workpiece, and respective lowered positions of start and end of travel, in which it picks up the workpiece from the magazine and places it in a working position. The return travel of the arm along the rectilinear guide is carried out, for example, in unloaded conditions.

Document US-A-4 790 584 reveals a two-axes-compensation device associated to the operating tool of an industrial robot, in which a manipulator arm is mobile in a horizontal direction (so-called Cartesian axis X) and carries at its bottom end an operating tool, which is mobile between a raised position, in which it supports - during a travel parallel to said axis (X) - a workpiece, and respective lowered positions of start and end of travel, in which it picks up and places the workpiece in a working position, said compensation device comprising:
- a structure for connection between a horizontal plate fixed to the arm and a horizontal plate for attachment of the operating tool having a variable-geometry configuration, under the action of forces a component of which is directed along a Cartesian axis in the horizontal plane (X, Y), and controlled mobility, under the action of forces a component of which is directed according to the other Cartesian axis in the horizontal plane (Y, X), so as to exceed, by means of variation of geometrical configuration and/or by means of controlled translation mobility, a physical barrier, with respect to which said tool operatively interferes, if the order of the interference between said parts falls within a range of predetermined dimensional tolerances with respect to the Cartesian axes (X, Y) in the horizontal plane;
- it further comprises means for compensation of said variation of geometrical configuration and/or of said controlled mobility, which, after said physical barrier has been exceeded, restore automatically the initial geometry and arrangement of said structure.

Document US-A-4 790 584 reveals the concept of a combination of a parallelogram and sliding action as an x-y-compliance device.

During said operations of the manipulator arm, there may arise the drawback that positioning of the workpiece in a working position is carried out by the collet in an improper way on account of interference with respect to a physical barrier that rigidly delimits positioning of the workpiece itself for its further machining/manipulation. Said error of positioning can be of two orders of magnitude; namely:
a) it falls within a range of predetermined dimensional tolerances with respect to the axes X and Y (in the horizontal plane); or else
b) it falls outside the aforesaid predetermined tolerances.

In known industrial robots, even though said error of positioning falls in modest dimensional tolerances, it entails arrest of the system, with consequent interruption of the working rate.

The present invention is aimed at providing a remedy to the aforesaid drawback.

Consequently, a purpose of the present invention is to provide a two-axes-compensation and anticollision device associated to the operating tool of an industrial robot that will enable automatic correction of the error of positioning of the workpiece in a working position by the operating tool, if it falls within a range of predetermined dimensional tolerances with respect to the axes X and Y (in the horizontal plane), or else, if the error falls outside this range, will automatically bring about arrest of the robot.

Another purpose of the present invention is to provide a two-axes-compensation and anticollision device associated to the operating tool of an industrial robot that can be selectively activated or de-activated, during operation of the robot, according to the working cycle to be performed.

A further purpose of the invention is to provide a two-axes-compensation and anticollision device associated to the operating tool of an industrial robot that will have a simple structure, will be safe and reliable in operation, and will present a relatively contained cost.

With a view to achieving the above purposes, the present invention provides a two-axes-compensation and anticollision device associated to the operating tool of an industrial robot, the essential characteristic of which forms the subject of Claim 1.

Further advantageous characteristics are described in the dependent claims.

The aforementioned claims are understood as being integrally incorporated herein.

The present invention will emerge more clearly from the ensuing detailed description with reference to the attached drawings, which are provided purely by way of non-limiting example, and in which:
- Figure 1 is a view in elevation of the two-axes-compensation and anticollision device associated to the operating tool of an industrial robot, according to an example of embodiment of the invention;
- Figure 2 is a view in cross section according to the line II-II of Figure 1;
- Figure 3 is a view in the direction of the arrow III of Figure 1;
- Figures 4 and 5 are views in the direction, respectively, of the arrow IV and of the arrow V of Figure 3; and
- Figure 6 is a cross-sectional view according to the line VI-VI of Figure 3.

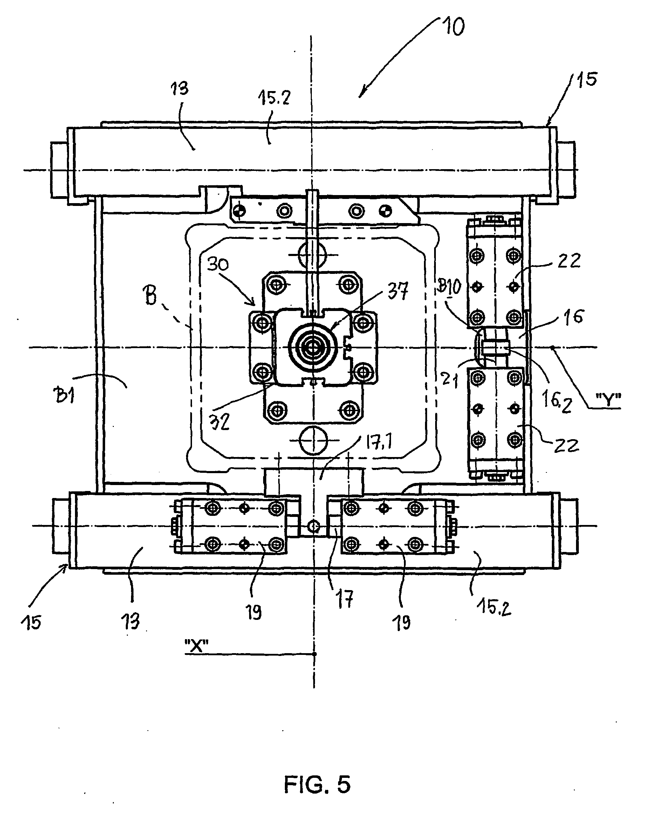

With reference to the drawing, designated by B is the bottom part of a vertical manipulator arm (represented with dashed lines), which carries a free-end fixed horizontal plate B1. Said manipulator arm B is, for example, rigid and is mounted mobile in a horizontal direction (here assumed as cartesian axis X, Figure 5) along a horizontal rectilinear guide constituted by a suspended bar (not represented in the drawings).

Mounted on said plate B1 is the two-axes-compensation and anticollision device 10, according to the invention, associated to the operating tool of the arm B.

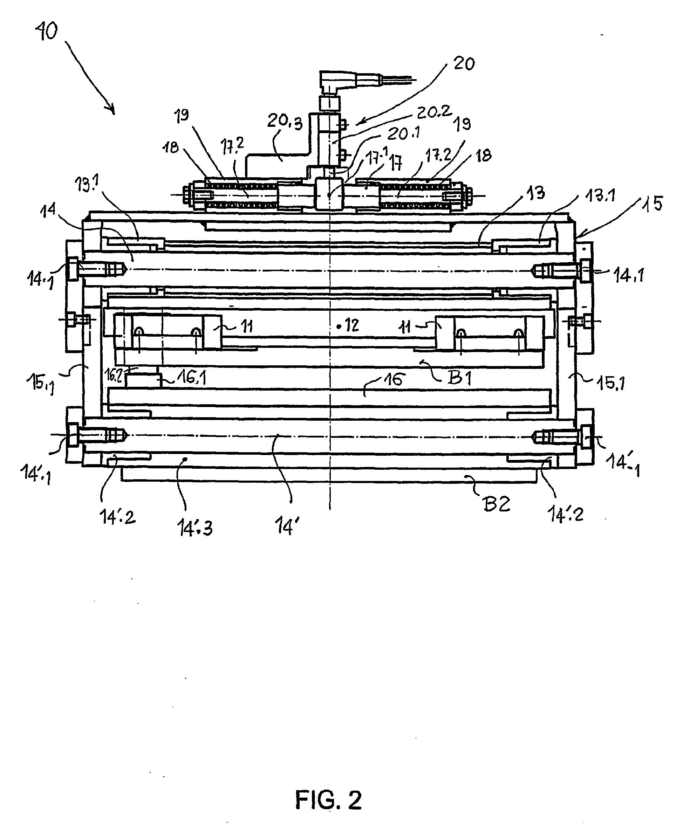

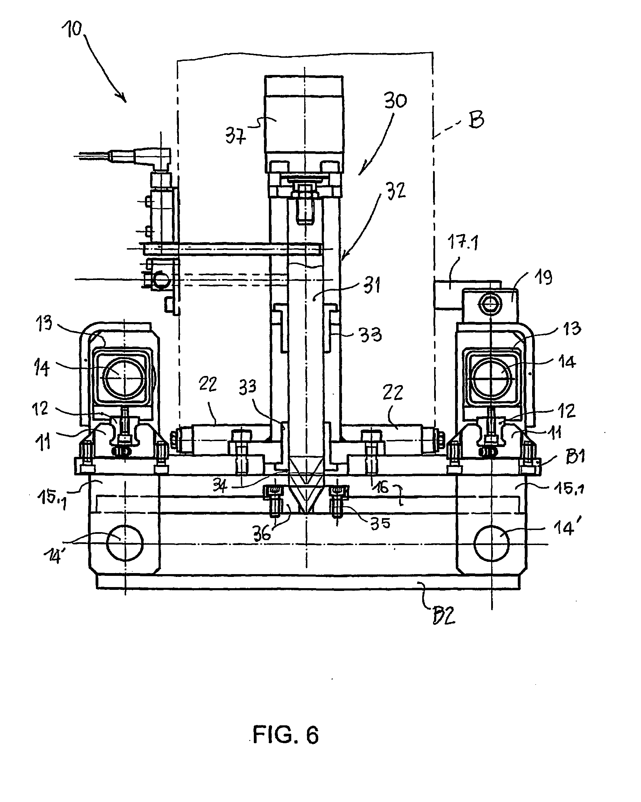

Said device 10 comprises four fixed blocks 11 (Figures 2, 6), mounted in pairs on the plate B1, on opposite sides of the arm B. Said blocks 11 extend parallel to the direction of the horizontal cartesian axis Y (Figure 5) and are aligned in pairs to one another. They have a basically U-shaped cross section open upwards. Mounted by linear sliding within each pair of blocks 11 is a corresponding rectilinear guide 12, which is mobile parallel to the axis Y. Each guide 12 carries fixed at the top a respective box 13, provided within which is a cylindrical seat with axis parallel to the axis Y and formed by coaxial end bushings 13.1, housed coaxially in which in such a way that it can turn is a corresponding shaft 14. Each shaft 14 supports a respective vertical frame 15 shaped like a U turned upside down, provided with a pair of vertical uprights 15.1 with holes for housing the axial ends of said shaft 14 and of a horizontal top cross member 15.2, which overlies the box 13, without making contact therewith, and is parallel to the axis Y. Mounting-plate means, fixed to said uprights 15.1 by means of screws and appropriately perforated, co-operate with two opposite axial screws 14.1 so as to render said frame 15 fixed with respect to the respective shaft 14.

The vertical uprights 15.1 of the frame 15 extend with their bottom ends further down than the plate B1 and support in a rotating way, within respective holes aligned according to an axis parallel to the axis Y, a corresponding bottom shaft 14' with axis parallel to the axis Y. Mounting-plate means, fixed to said uprights 15.1 by means of screws and appropriately perforated, co-operate with two opposite axial screws 14'.1 so as to render said frame 15 fixed also with respect to the respective bottom shaft 14'. It will be noted that, at rest, the axes of the shafts 14, 14' associated to one and the same frame 15 lie substantially in one and the same vertical plane.

Provided above the cross member 15.2 of the front frame 15 with respect to the direction of advance of the arm B according to the axis X, is a horizontal shaft 17 with axis parallel to the axis Y, which extends in a specularly symmetrical way with respect to the vertical median plane that cuts the shafts 14, 14' and is fixed, by means of an intermediate insert 17.1, to the arm B. Coaxially fitted on parts 17.2 of said shaft 17, axially opposite to one another and of reduced diameter, are respective helical compression springs 18. Said axially opposite parts 17.2 of said shaft 17 with respective coaxial springs 18 are received in corresponding coaxial cylindrical cavities of casings 19, fixed to said cross member 15.2 in a specularly symmetrical way with respect to said median plane. It will be noted that the cylindrical cavity of the casings 19 is of a diameter such as to receive in axial sliding the shaft 17, also in its part of larger diameter. Washers having an external diameter corresponding to that of the shaft 17 are fixed by means of screws against the axial ends of the parts 17.2 of the shaft 17 and prevent the springs 18 from sliding out axially.

The insert 17.1 carries at the top, in a position corresponding to said median plane, a sensitive member 20.1, for example a pin with cylindrical head, for a proximity sensor 20, the detector 20.2 of which is fixed with respect to the cross member 15.2 of the frame 15 by means of a bracket 20.3.

An intermediate horizontal plate 16 is supported beneath and fixed to the plate B1, at a distance therefrom, and at the top fixed to the bottom shafts 14', which are housed rotating in corresponding end bushings 14'.2, which are fixed with respect to a respective guard 14'.3 that supports said plate 16 from beneath.

An insert 16.1 is fixed along one side of said plate 16 and in a position corresponding to the vertical median plane parallel to the axes of the shafts 14, 14'. A fixed median vertical upright 16.2 of said insert traverses a corresponding wide hole B10 of the plate B1 and supports a fixed shaft 21 with axis parallel to the axis X and extending symmetrically with respect to said median plane. Fitted coaxially on axially opposite parts of said shaft 21 that have a reduced diameter (not visible in the drawing) are respective helical compression springs. Said axially opposite parts of said shaft 21 with respective coaxial springs are received in corresponding coaxial cylindrical cavities of respective casings 22, fixed to said plate B1 in a specularly symmetrical way with respect to said median plane. It will be noted that the cylindrical cavity of each casing 19 has a diameter such as to receive in free axial sliding the shaft 21, also in its part of larger diameter, as well as washers having an external diameter corresponding to that of the shaft 21, which are fixed by means of screws against the axial ends of said opposite parts of the shaft 21 and prevent the corresponding springs from sliding out axially.

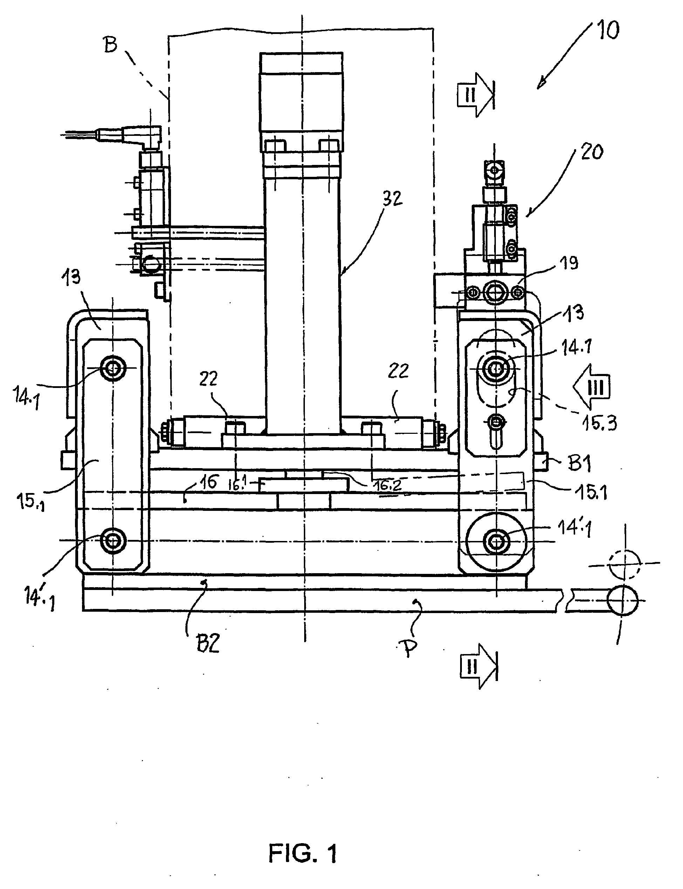

Said guards 14'.3 of the bottom shafts 14' support a fixed bottom horizontal plate B2, which is provided for anchorage of the manipulator tool, for example a collet, and which only in Figure 1 is illustrated schematically and designated by P.

It will be noted that in the vertical uprights 15.1 of the front frame 15, anterior with respect to the direction of displacement according to the axis X, the mounting holes 15.3 of the respective top shafts 14 are slot-shaped, as likewise the holes in the mounting plates corresponding to the shaft 14 and to the fixing screw of the plate. The major axis of said slot-shaped holes is vertical.

The arrangement of the two slidable guides 12 in the blocks 11, of the four shafts 14, 14' with corresponding two frames 15, 15.1 and intermediate plate 16 and bottom plate B2 provides a connection between the plate B1 fixed to the arm B and the plate B2 for attachment of the collet P having a geometry that varies under the action of forces directed in the direction of displacement of the arm (i.e., according to the axis X) and having a controlled transverse mobility under the action of forces directed orthogonally to the direction itself (i.e., according to the axis Y).

### Operation

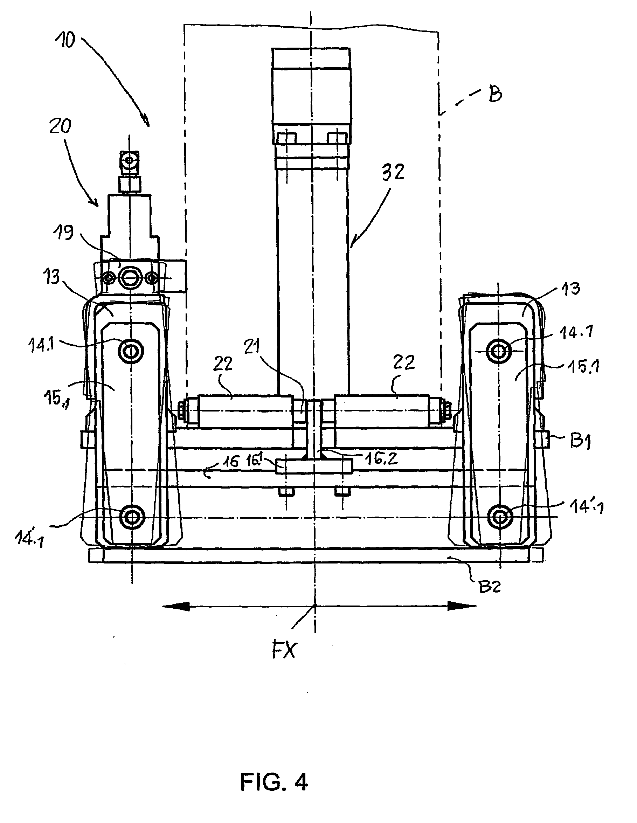

On the one hand, said arrangement behaves as an articulated-parallelogram variable-geometry system (viewed, for example, in the plane of Figure 4), when said bottom plate B2 is subject to a component of force directed according to the cartesian axis X, for example, on account of the interference between the collet P in the descending step and a physical barrier that rigidly delimits positioning of the workpiece carried by the collet for its further machining/manipulation. In this case, the vertical uprights 15.1 of the frames 15 oscillate with respect to the axis of the top shafts 14 (as represented schematically in said Figure 4 by thin lines), whilst the bottom horizontal plate B2, and along with this the collet, displaces with respect to the arm B, horizontally and in a direction parallel to the axis X so as to overstep said barrier, if the order of magnitude of the interference is, for example, smaller than or equal to ±10 mm. In this case, said displacement reflects on the intermediate horizontal plate 16 and determines a corresponding horizontal translation according to the axis X also of the shaft 21 in a direction opposite to that of said horizontal component of force, elastically loading, in a way proportional to the displacement, the compression spring supported by the part of said shaft 21, which is brought to re-enter partially within the respective casing 22. Once the barrier has been overstepped, on account of the elastic reaction of the aforesaid pre-loaded spring and of the reverse deformation of the aforesaid variable-geometry system, the arrangement of the four shafts 14, 14' with corresponding two frames 15, 15.1 and intermediate horizontal plate 16 and bottom horizontal plate B2 is automatically brought back into the normal configuration, in which the top shafts 14 and bottom shafts 14' are arranged in pairs according to respective basically vertical surfaces. In Figure 4, the double-headed arrow FX indicates the possibility described above of compensation according to the axis X of the aforesaid arrangement of parts 14, 14', 15, 15.1, 16, B2 of the device 10 according to the invention. Illustrated schematically with thin lines in said Figure 4 is the possibility of deformation in parallelogram fashion of said arrangement.

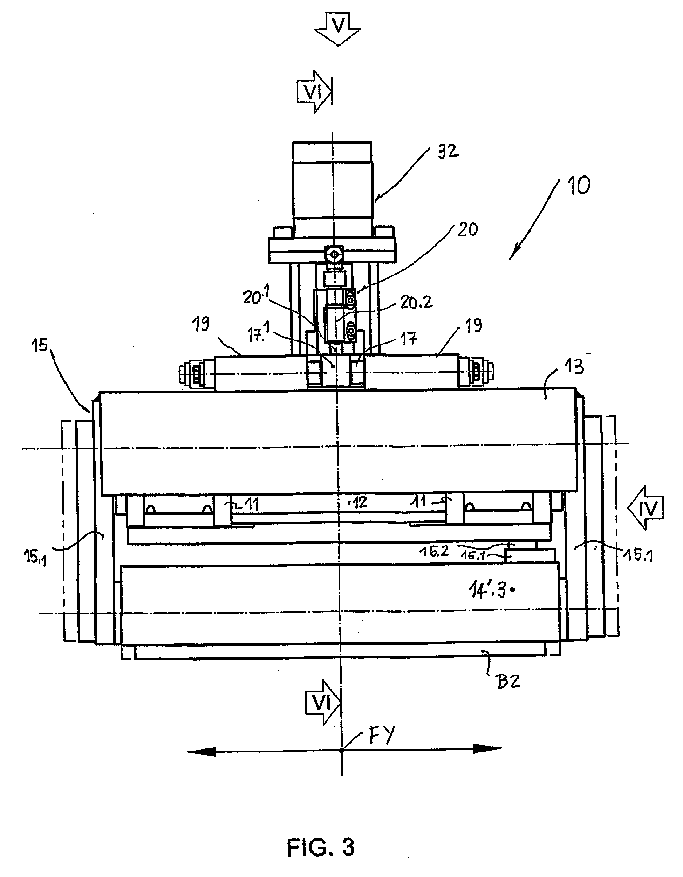

On the other hand, the arrangement of the four shafts 14, 14', corresponding frames 15 and intermediate horizontal plate 16 and bottom horizontal plate B2 behaves as a rigid body, which is mobile in the direction of the axis Y with respect to the fixed plate B1 and hence with respect to the arm B by means of sliding of the guides 12, which are fixed with respect to said rigid body, with respect to the corresponding blocks 11, when said bottom plate B2 is subjected to a component of force directed according to said axis Y, for example on account of the interference between the collet P in the descending stage and a physical barrier that rigidly delimits positioning of the workpiece carried by the collet for its further machining/manipulation. In this case, the frames 15, 15.1 with the corresponding shafts 14, 14' and intermediate horizontal plate 16 and bottom horizontal plate B2 translate parallel to the axis Y in the same direction as the horizontal component of the force applied on the plate B2. Together with the plate B2 there displaces accordingly, in a horizontal direction parallel to the axis Y, the collet P with respect to the arm B so as to overstep said barrier, if the order of magnitude of the interference is, for example, smaller than or equal to ±10 mm. In this case, said displacement reflects on the cross member 15.2 of the frame 15 that supports the casings 19 and determines a corresponding horizontal translation according to the axis Y of said casings with respect to the shaft 17 (fixed to the arm B) in a direction concordant with that of said horizontal component of force, elastically loading, in a way proportional to the displacement, the compression spring 18, which is compressed by the corresponding casing. Once the barrier has been exceeded, thanks to the elastic reaction of the aforesaid pre-loaded spring 18 and to the reverse translation of the aforesaid system with controlled transverse mobility, the arrangement of the four shafts 14, 14' with corresponding two frames 15, 15.1 and intermediate horizontal plate 16 and bottom horizontal plate B2 is automatically brought back into the normal configuration, in which the top shafts 14 and bottom shafts 14' are arranged in a way symmetrically specular with respect to the vertical median plane of which the line of section VI-VI has been drawn in Figure 3. In said Figure 3 the double-headed arrow FY indicates the possibility of compensation according to the axis Y described above of the aforesaid arrangement of parts 14, 14', 15, 15.1, 16, B2 of the device 10 according to the invention. Schematically represented with the thin dashed lines in Figure 3 are the positions of extreme translation of said system in the two directions of the axis Y.

In the case where said physical barrier extends beyond the range of the aforesaid predetermined dimensional tolerances with respect to the axes X and Y (±10 mm in the horizontal plane), the corresponding variable-geometry deformation, or the corresponding transverse translation of said arrangement of the four shafts 14, 14', corresponding frames 15 and intermediate horizontal plate 16 and bottom horizontal plate B2, determines a relative displacement of the sensitive member 20.1 associated to the detector 20.2 of the proximity sensor 20 such as to induce issuing of a general-error signal, which causes instantaneous arrest of the arm B, or a signal that is discriminated to identify whether the error refers to the cartesian axis X or the cartesian axis Y.

Likewise, if the collet P during the working travel in the direction X encounters an insurmountable obstacle, the latter causes, as illustrated in Figure 1, an oscillation upwards of the plate B2 about the axis of the bottom shaft 14' that is distal with respect to said obstacle. Said oscillation entails sliding upwards of the other bottom shaft 14' (which is not prevented by the corresponding guard) and hence of the frame 15, 15.1 fixed with respect thereto, whilst the corresponding upper shaft 14 remains immobile within the respective slots 15.3. The displacement upwards of said frame 15, 15.1 determines the corresponding translation upwards of the respective cross member 15.2 and of the detector 20.2 of the sensor 20 along with this, which, by moving away from the respective sensitive member 20.1, determines issuing of a general-error signal, which causes instantaneous arrest of the arm B, or a signal that is discriminated to identify whether the error refers to the anticollision means.

The present invention moreover provides clamping means 30 (Figure 6) designed to fix, selectively and in a dismantlable way, the arm B monolithically with respect to the bottom plate B2 for attachment of the collet so as to prevent the corresponding mobility of said plate with respect to any cartesian axis on account, for example, of inertial forces and/or accelerations acting on the arm itself.

Said clamping means 30 comprise a cylindrical rod 31 with tapered tip at the bottom and with vertical axis set on the intersection of the two vertical median surfaces of the plate B1. Said rod 31 is supported slidingly with respect to the plate B1 by means of a framework 32 erected on the plate itself and in which two bushings 33 are provided coaxial with respect to said rod and having the function of guide for said rod. A through hole 34 is provided in the plate B1 coaxial to said rod for free passage of the tapered tip thereof. The intermediate plate 16 is provided with a corresponding coaxial hole 35, fixed in which is a bushing 36, which has a corresponding conical seat, coaxial and facing the tip of the rod 31. Fixed to the top of the framework 32 is a pneumatic operating cylinder 37, the stem of which is operatively connected with respect to the end of the rod 31 opposite to its conical tip. Said cylinder 37 is connected in a sealed way with respect to a corresponding circuit for supply of pressurized air so as to be supplied therewith according to software-program instructions pre-loaded into a PLC processing calculation unit (not illustrated), which governs the working cycle of the arm B. When said cylinder 37 is pneumatically supplied, its own stem extends, and the rod 31 is brought to engage with its tapered tip the corresponding conical seat of the bushing 36, rendering fixed in a monolithic body said intermediate plate 16, and hence the bottom plate B2 for attachment of the collet P, with respect to the bottom plate B1 of the arm B.

Retraction of the stem into the operating cylinder 37 determines the corresponding retraction of the tip of the rod 31 from the bushing 36, as far as into the hole 34 of the plate B1, a fact that again renders the connection between said plate B1 of the arm B and the collet plate B2 a connection with variable geometry and with controlled transverse mobility, if the plate B2 is affected by forces acting along the axes X and/or Y in the horizontal plane.

As emerges from the foregoing description, the present invention enables the purposes set forth in the premise to be achieved in a simple and effective way.

## Claims

1. A two-axes-compensation device associated to the operating tool of an industrial robot, in which a manipulator arm (B) is mobile in a horizontal direction (so-called cartesian axis X) and carries at its bottom end an operating tool (P), which is mobile between a raised position, in which it supports - during a travel parallel to said axis (X) - a workpiece, and respective lowered positions of start and end of travel, in which it picks up and places the workpiece in a working position, said compensation device comprising:
- a structure (11, 12, 14, 14', 15, 15.1, 16) for connection between a horizontal plate (B1) fixed to the arm (B) and a horizontal plate (B2) for attachment of the operating tool (P) having parallelogram linkage means (14, 14', 15, 15.1, 16) permitting said horizontal plate (B2) to be moved in a direction parallel to said cartesian axis (X) in the horizontal plane (X, Y), under the action of forces a component of which is directed along said cartesian axis, and sliding means (11, 12) permitting said horizontal plate (B2) to be moved in a direction parallel to the other cartesian axis (Y) in the horizontal plane (X, Y), under the action of forces a component of which is directed according to the said other cartesian axis, so as to exceed a physical barrier, with respect to which said tool operatively interferes, if the order of the interference between said parts falls within a range of predetermined dimensional tolerances with respect to the cartesian axes (X, Y) in the horizontal plane;
- restoring means (15.2, 17, 17.1, 17.2, 18, 19; 16, 16.1, 16.2, 21, 22) which, after said physical barrier has been exceeded, restore automatically the initial geometry and arrangement of said structure; and
- sensor means (20, 20.1, 20.2), which determine issuing of a general-error signal, which causes instantaneous arrest of the arm (B), or a signal that is discriminated for identifying whether the error refers to a cartesian axis (X, Y), and this in the case where the deformation of the said structure, caused by said barrier, exceed the range of said predetermined dimensional tolerances with respect to the cartesian axes (X, Y) in the horizontal plane;
in which said structure (11, 12, 14, 14', 15, 15.1, 16) moreover comprises anticollision means (15.3), which, if said operating tool (P) during a travel of the arm (B) encounters an insurmountable obstacle, cause a displacement of at least one part of said structure (15, 15.1, 15.2) that determines issuing by said sensor means (20, 20.1, 20.2) of a general-error signal, which brings about instantaneous arrest of the arm (B), or a signal that is discriminated for identifying whether the error refers to said anticollision means; and
in which said parallelogram linkage means (14, 14', 15, 15.1, 16) of said structure comprise:
- two first shafts (14) with axis parallel to said other cartesian axis (Y) and supported fixed each by a respective element (12) of said sliding means (11, 12);
- two vertical frames (15) shaped like a U turned upside down, each supported by a respective one of said first shafts (14) and each provided with a pair of vertical uprights (15.1), with holes for rotary housing of the axial ends of the respective shaft (14), and with a horizontal top cross member (15.2);
- two second shafts (14') with axis parallel to said other cartesian axis (Y) and each supported in a rotary way by a respective frame (15), within holes of its uprights (15.1) underlying said plate (B1) that is fixed with respect to the arm (B); and
- said fixed bottom horizontal plate (B2), provided for anchorage of the manipulator tool (P), fixed at the bottom to said second shafts (14');
**characterized in that**
said anticollision means comprise slot-shaped holes (15.3) for mounting said first shafts (14) in the vertical uprights (15.1) of the front frame (15), in the direction of displacement along said cartesian axis (X) in the horizontal plane,
so that, if the operating tool (P) during the working travel parallel to said cartesian axis (X) encounters an insurmountable obstacle, the latter causes an oscillation upwards of the bottom plate (B2) about the axis of the second shaft (14') that is distal with respect to said obstacle and, hence, a displacement upwards of the frame (15, 15.1) close to the obstacle, this determining the corresponding translation upwards of the respective cross member (15.2) and along with this of a detector (20.2) of the sensor means (20), which, by moving away from a respective sensitive member (20.1), causes issuing a general-error signal, which brings about instantaneous arrest of the arm (B), or a signal that is discriminated for identifying whether the error regards a cartesian axis (X, Y) or else the anticollision means.

## Patentansprüche

1. Zwei-Achsen-Ausgleichvorrichtung, verbunden mit dem Werkzeug eines Industrieroboters, worin ein Roboterarm (B) frei beweglich in einer horizontalen Richtung (so genannte x-Achse) ist und an seinem unteren Ende ein Werkzeug (P) trägt, das beweglich ist zwischen einer gehobenen Position, in der es - während eines zur genannten x-Achse parallelen Arbeitswegs - ein Werkstück lagert und den entsprechenden gesenkten Positionen bei Arbeitsweganfang und -ende, in denen es das Werkstück entnimmt und in die Arbeitsposition platziert, wobei genannte Ausgleichvorrichtung aus:
- einer Verbindungsstruktur (11, 12, 14, 14', 15, 15.1, 16) zwischen einer am Arm (B) befestigten horizontalen Platte (B1) und einer horizontalen Platte (B2) für die Ankopplung an das Werkzeug (P), welche parallelogrammförmige Verbindungsmittel (14, 14', 15, 15.1, 16) hat, durch welche die genannte horizontale Platte (B2) in einer zur genannten x-Achse (X) parallelen Richtung in der Horizontalebene (X, Y) bewegt werden kann, unter der Einwirkung von Kräften, von denen ein Bestandteil nach genannter Achse gerichtet ist, und weiters Gleitmittel (11, 12), durch welche genannte horizontale Platte (B2) in eine zur anderen Achse (Y) parallelen Richtung in der Horizontalebene (X, Y) bewegt werden kann, unter Einwirkung von Kräften, von denen ein Bestandteil nach genannter anderen Achse gerichtet ist, sodass eine physikalische Barriere überschritten wird, hinsichtlich der das genannte Werkzeug interferiert, wenn die Größenordnung der Interferenz zwischen genannten Teilen innerhalb eines Bereiches von vorbestimmten Maßabweichungen bezüglich der Achsen (X, Y) in der Horizontalebene liegt,
- Wiederherstellungsmittel (15.2, 17, 17.1, 17.2, 18, 19, 16, 16.1, 16.2, 21, 22), die nach Überschreitung der genannten physikalischen Barriere die Geometrie und die anfängliche Anordnung genannter Struktur wiederherstellen, und
- Sensormittel (20, 20.1, 20.2), welche die Abgabe eines allgemeinen Fehlersignals bewirken, das den unmittelbaren Stillstand des Armes (B) veranlasst, oder eines Signals, das unterschieden wird, um festzustellen, ob der Fehler eine Achse (X, Y) betrifft, und dies im Fall, dass die durch genannte Barriere verursachte Verformung der Struktur den Bereich der genannten vorbestimmten Maßabweichungen von den Achsen (X, Y) in der Horizontalebene Oberschreitet, besteht;
worin genannte Struktur (11, 12, 14, 14', 15, 15.1, 16) ferner Aufprallschutzmittel (15.3) umfasst, die im Falle, dass genanntes Werkzeug (P) während einer Bewegung des Armes (B) ein unüberwindbares Hindernis trifft, eine Verschiebung von mindestens einem Teil der genannten Struktur (15, 15.1, 15.2) verursachen, die von Seiten der genannten Sensormittel (20, 20.1, 20.2) zur Ausgabe eines allgemeinen Fehlersignals führt, das den unmittelbaren Stillstand des Armes (B) verursacht, oder eines Signals, das unterschieden wird, um festzustellen, ob der Fehler die genannten Aufprallschutzmittel betrifft und
worin die genannten parallelogrammförmigen Verbindungsmittel (14, 14', 15, 15.1, 16) der genannten Struktur aus:
- zwei ersten Wellen (14) mit paralleler Achse zu genannter anderen Achse (Y), jeweils fest gelagert von einem entsprechenden Element (12) der genannten Gleitmittel (11, 12),
- zwei vertikalen Rahmen (15) in Form eines umgekehrten "U", jeweils von einer entsprechenden ersten Welle (14) gelagert und jeweils ausgestattet mit einem Paar vertikaler Ständer (15.1) mit Bohrungen für die drehbare Aufnahme der Achsenenden der jeweiligen Welle (14) sowie mit einem horizontalen Aufsatzquerstück (15.2),
- zwei zweiten Wellen (14') mit paralleler Achse zu genannter anderen Achse (Y), jeweils drehend gelagert von einem entsprechenden Rahmen (15), in Bohrungen von dessen Ständer (15.1) unterhalb der am Arm (B) befestigten genannten Platte (B1), und aus
- genannter horizontalen fixen unteren Platte (B2), ausgestattet für die Verankerung des Handhabungswerkzeugs (P), unterhalb der genannten zweiten Wellen (14') befestigt, bestehen;
**dadurch gekennzeichnet, dass** genannte Aufprallschutzmittel Schlitzlöcher (15.3) umfassen für die Montage der genannten ersten wellen (14) in die vertikaler ständer (15.1) des vorderen Rahmens (15), in die verschiebungsrichtung entlang genannter Achse (X) in der Horizontalebene,
derart dass, wenn das Werkzeug (P) während des zu genannter Achse (X) parallelen Arbeitswegs auf ein unüberwindhares Hindernis stößt, dieses eine Schwingung nach oben der unteren Platte (B2) um die Achse der von genanntem Hindernis distalen zweiten Welle (14') und damit eine Verschiebung nach oben des in der Nähe der Hindernis befindlichen Rahmens (15, 15.1) erzeugt, wodurch die entsprechende Verschiebung nach oben des entsprechenden Querstückes (15.2) und damit eines Fühlers (20.2) des Sensors (20) bewirkt wird, der durch die Fortbewegung vom zugehörigen Sensorelement (20.1) die Ausgabe eines allgemeinen Fehlersignals verursacht, das den unmittelbaren Stillstand des Armes (B) verursacht, oder eines Signals, das unterschieden wird, um festzustellen, ob der Fehler eine Achse (X, Y) oder die Aufprallschutzmittel betrifft.

## Revendications

1. Dispositif de compensation sur deux axes associé à l'outil de travail d'un robot industriel, où un bras manipulateur (B) est mobile dans une direction horizontale (nommée axe cartésien X) et porte à son extrémité inférieure un outil de travail (P) mobile entre une position soulevée, où il soutient - durant une course parallèle audit axe (X) - une pièce à usiner, et des positions respectives abaissées de début et de fin de course, dans lesquelles il prélève et place en position de travail la pièce, ledit dispositif de compensation comprenant :
- une structure (11, 12, 14, 14', 15, 15.1, 16) de liaison entre une plaque horizontale (B1) fixée au bras (B) et une plaque horizontale (B2) de fixation de l'outil de travail (P) ayant des dispositifs de liaison en parallélogramme (1A, 15, 15.1, 16) qui permettent à ladite plaque horizontale (B2) d'être déplacée dans une direction parallèle audit axe cartésien (X) sur le plan horizontal (X, Y), sous l'action de forces dont une composante est dirigée selon ledit axe cartésien, et des dispositifs de coulissement (11, 12) qui permettent à ladite plaque horizontale (B2) d'être déplacée dans une direction parallèle à l'autre axe cartésien (Y) sur le plan horizontal (X, Y), sous l'action de force dont une composante est dirigée selon ledit autre axe cartésien, afin de franchir une barrière physique par rapport à laquelle ledit outil de travail interfère, si l'ordre de l'interférence entre lesdites parties rentre dans une plage de tolérances de dimension prédéterminées par rapport aux axes cartésiens (X, Y) sur le plan horizontal,
- des dispositifs de rétablissement (15.2, 17, 17.1, 17.2, 18, 19, 16, 16.1, 16.2, 21, 22) qui, une fois franchie ladite barrière physique, rétablissent automatiquement la géométrie et la disposition initiale de ladite structure, et
- des dispositifs de détection (20, 20.1, 20.2), qui déterminent l'émission d'un signal d'erreur général provoquant l'arrêt immédiat du bras (B), ou bien un signal qui est discriminé pour identifier si l'erreur concerne un axe cartésien (X, Y), et ceci dans le cas où la déformation de ladite structure, causée par ladite barrière, dépasse la plage desdites tolérances de dimension prédéterminées par rapport aux axes cartésiens (X, Y) sur le plan horizontal ;
où ladite structure (11, 12, 14, 15, 15.1, 16) comprend également des dispositifs anticollision (15.3) qui, si l'outil de travail (P) durant une course du bras (B) rencontre un obstacle infranchissable, provoquent un déplacement d'une partie au moins de ladite structure (15, 15. 1, 15.2) provoquant l'émission de la part desdits dispositifs de détection (20, 20.1, 20.2) d'un signal d'erreur général, qui provoque l'arrêt immédiat du bras (B), ou bien un signal qui est discriminé pour identifier si l'erreur concerne lesdits dispositifs anticollision et
où lesdits dispositifs de liaison en parallélogramme (14, 14', 15, 15.1, 16) de ladite structure comprennent :
- deux premiers arbres (14) à axe parallèle audit autre axe cartésien (Y) et supportés fixés chacun par un élément respectif (12) desdits dispositifs de coulissement (11, 12),
- deux châssis verticaux (15) en « U » renversé, supportés respectivement chacun par l'un desdits premiers arbres (14) et dotés chacun d'une paire de montants verticaux (15.1), avec des trous de logement rotatifs des extrémités axiales de l'arbre respectif (14), et d'une traverse au sommet (15.2) horizontale,
- deux arbres secondaires (14') à axe parallèle audit autre axe cartésien (Y) et supportés de manière rotative chacun par un châssis respectif (15), dans les trous de ses montants (15.1) au-dessous de ladite plaque (B1) solidaire avec le bras (B), et
- ladite plaque horizontale inférieure fixe (B2), prévue pour l'ancrage de l'outil de manipulation (P), fixée par sa partie inférieure auxdits deuxièmes arbres (14');
**caractérisé par le fait que** lesdits dispositifs anticollision comprennent des trous en forme de fente (15.3) de montage desdits premiers arbres (14) dans les montants verticaux (15.1) du châssis (15), antérieur dans la direction de déplacement le long dudit axe cartésien (X) sur le plan horizontal,
de sorte que, si l'outil de travail (P) durant la course de travail parallèle audit axe cartésien (X) rencontre un obstacle infranchissable, ce dernier cause une oscillation vers le haut de la plaque inférieure (B2) autour de l'axe du deuxième arbre (14') distal dudit obstacle et, par conséquent, un déplacement vers le haut du châssis (15, 15.1) proche de l'obstacle, ce qui détermine la translation correspondante vers le haut de la traverse respective (15.2) et avec elle d'un détecteur (20.2) du capteur (20) qui, en s'éloignant d'un organe sensible respectif (20.1), provoque l'émission d'un signal d'erreur général, qui provoque l'arrêt immédiat du bras (B), ou bien un signal qui est discriminé pour identifier si l'erreur concerne un axe cartésien (X, Y) soit les dispositifs anticollision.
